# EUROPEAN PATENT SPECIFICATION

(11) **EP 1 083 117 B1**
(45) Date of publication and mention of the grant of the patent: **26.10.2005**
(21) Application number: 00307510.8
(22) Date of filing: 31.08.2000
(51) Int. Cl.: B62D 27/02, B62D 65/00, H05B 6/02

(54) **Method of manufacturing a vehicle frame assembly**
Fahrzeugrahmenherstellungsverfahren
Méthode de production de chassis de véhicule

(30) Priority: 09.09.1999 US 392270; 30.09.1999 US 408747
(43) Date of publication of application: 14.03.2001
(73) Proprietor: DANA CORPORATION, Toledo, OH 43606 (US)
(72) Inventor: Marando, Richard A., Mohrsville, PA 19541 (US); Poirier, Jason A., Birdsboro, PA 19508 (US); Kiehline, John L., Reading, PA 19606 (US); Stuck, Richard L., Stevens, PA 17578 (US)
(74) Representative: Cheyne, John Robert Alexander M.

(56) References cited:
- EP-A- 0 568 251
- WO-A-97/10907
- FR-A- 2 368 547
- US-A- 2 676 233
- US-A- 3 258 573
- DATABASE WPI Section Ch, Week 199627 Derwent Publications Ltd., London, GB; Class M21, AN 1996-266511 XP002236685 & SU 758 623 A (UNIV TULA TECH), 10 October 1995 (1995-10-10)

## Description

### BACKGROUND OF THE INVENTION

This invention relates in general to the manufacture of structural members having desired shapes, such as components for use in vehicle frame assemblies. More specifically, this invention relates to a method for initially performing a heat treatment process on a closed channel structural member to facilitate the subsequent performance of a magnetic pulse welding process so as to manufacture a vehicle frame component or a portion of a vehicle frame assembly.

Many land vehicles in common use, such as automobiles, vans, and trucks, include a body and frame assembly that is supported upon a plurality of ground-engaging wheels by a resilient suspension system. The structures of known body and frame assemblies can be divided into two general categories, namely, separate and unitized. In a typical separate body and frame assembly, the structural components of the body portion and the frame portion are separate and independent from one another. When assembled, the frame portion of the assembly is resiliently supported upon the vehicle wheels by the suspension system and serves as a platform upon which the body portion of the assembly and other components of the vehicle can be mounted. Separate body and frame assemblies of this general type are found in most older vehicles, but remain in common use today for many relatively large or specialized use modern vehicles, such as large vans, sport utility vehicles, and trucks. In a typical unitized body and frame assembly, the structural components of the body portion and the frame portion are combined into an integral unit that is resiliently supported upon the vehicle wheels by the suspension system. Unitized body and frame assemblies of this general type are found in many relatively small modem vehicles, such as automobiles and minivans.

Traditionally, the various components of known vehicle body and frame assemblies have been formed from open channel structural members, i.e., structural members that have a non-continuous cross sectional shape (U-shaped or C-shaped channel members, for example). Thus, it is known to use one or more open channel structural members to form the side rails, the cross members, and other components of a vehicle body and frame assembly. However, the use of open channel structural members to form the various components of a vehicle body and frame assemblies has been found to be undesirable for several reasons. First, it is relatively time consuming and expensive to bend portions of such components to conform to a desired final shape, as is commonly necessary. Second, after such bending has been performed, a relatively large number of brackets or other mounting devices must usually be secured to some or all of such components to facilitate the attachment of the various parts of the vehicle to the body and frame assembly. Third, in some instances, it has been found difficult to maintain dimensional stability throughout the length of such components, particularly when two or more components are welded or otherwise secured together.

To address this, it has been proposed to form one or more of the various vehicle body and frame components from closed channel structural members, i.e., structural members that have a continuous cross sectional shape (tubular or box-shaped channel members, for example). This cross sectional shape is advantageous because it provides strength and rigidity to the vehicle body and frame component. Also, this cross sectional shape is desirable because it provides vertically and horizontally oriented side surfaces that facilitate the attachment of brackets and mounts used to support the various parts of the vehicle to the body and frame assembly. In some instances, the various parts of the vehicle may be directly attached to the vertically and horizontally oriented side surfaces of the vehicle body and frame assembly.

In vehicle body and frame assemblies of the type described above, it is often necessary to join two or more structural members together to form a vehicle frame component or to form a portion of the vehicle frame assembly. Traditionally, conventional welding techniques have been used to permanently join the various components of the vehicle frame together. As is well known, conventional welding techniques involve the application of heat to localized areas of two metallic members, which results in a coalescence of the two metallic members. Such welding may or may not be performed with the application of pressure, and may or may not include the use of a filler metal. Although conventional welding techniques have functioned satisfactorily in the past, there are some drawbacks to the use thereof in joining metallic vehicle frame components together. First, as noted above, conventional welding techniques involve the application of heat to localized areas of the two metallic frame members. This application of heat can cause undesirable distortions and weaknesses to be introduced into the metallic components. Second, while conventional welding techniques are well suited for joining components which are formed from similar metallic materials, it has been found to be somewhat more difficult to adapt them for use in joining components formed from dissimilar metallic materials. Third, conventional welding techniques are not easily adapted for joining components which have different gauge thicknesses. Inasmuch as the production of vehicle frames is usually an high volume, low margin process, it would be desirable to provide an improved method and apparatus for permanently joining two or more metallic vehicle frame components which avoids the drawbacks of conventional welding techniques.

EP 0568251 A1 which is considered to be the most relevant prior-art document discloses the use of liquid pressure, ie hydroforming, to manufacture a vehicle frame component from a workpiece which is deformed.

US 3,258,573 discloses the use of heat to lower, in particular, the tensile strength of a metal component, which is deformed whilst hot.

### SUMMARY OF THE INVENTION

According to the present invention there is provided a method for manufacturing a vehicle frame component comprising the steps of:
providing a workpiece having a first portion and a second portion;
performing a retrogression heat treatment process on the workpiece in a continuous and longitudinal manner from the first portion of the workpiece to the second portion of the workpiece; and
deforming the workpiece to form a vehicle frame component.

Preferred features of the invention are the subject of the dependent claims.

Various objects and advantages of this invention will become apparent to those skilled in the art from the following detailed description of the preferred embodiments, when read in light of the accompanying drawings.

### BRIEF DESCRIPTION OF THE DRAWINGS

Fig. 1 is a flow chart of a method for manufacturing a vehicle frame assembly in accordance with the method of this invention.
Fig. 2 is a schematic side elevational view of a first embodiment of an apparatus for performing a scanning heat treatment process on a workpiece in accordance with this invention, wherein the workpiece is located at a starting position at the commencement of the scanning heat treatment process.
Fig. 3 is a schematic side elevational view similar to Fig. 2 wherein the workpiece is located at an intermediate position during the scanning heat treatment process.
Fig. 4 is a schematic side elevational view similar to Fig. 2 wherein the workpiece is located at an ending position at the conclusion of the scanning heat treatment process.
Fig. 5 is a schematic side elevational view of a second embodiment of an apparatus for performing a scanning heat treatment process on a workpiece in accordance with this invention, wherein the workpiece is located at an intermediate position during the scanning heat treatment process.
Fig. 6 is a schematic side elevational view of a third embodiment of an apparatus for performing a scanning heat treatment process on a workpiece in accordance with this invention, wherein the workpiece is located at an intermediate position during the scanning heat treatment process.
Fig. 7 is a schematic elevational view of an apparatus for performing a magnetic pulse welding operation after the scanning heat treatment process.

### DETAILED DESCRIPTION OF THE PREFERRED EMBODIMENTS

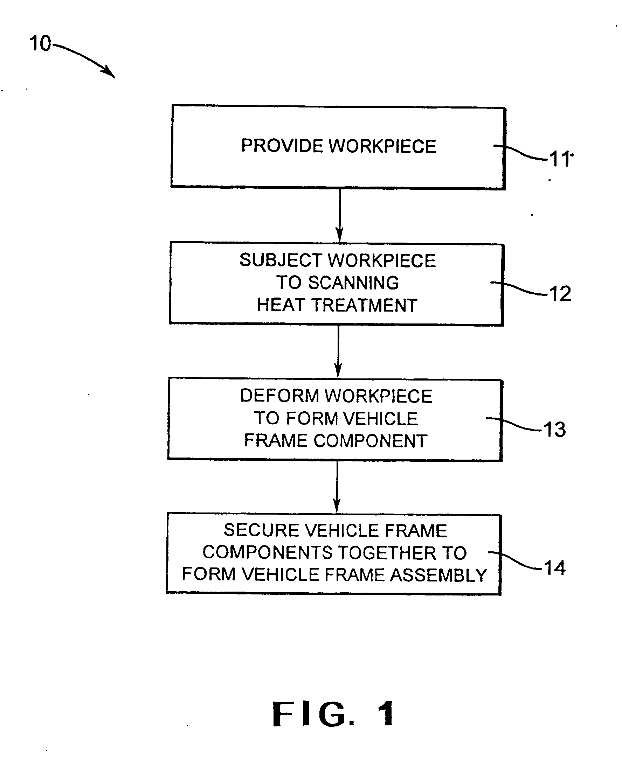

Referring now to the drawings, there is illustrated in Fig. 1 a flow chart of a method, indicated generally at 10, for manufacturing a vehicle frame assembly in accordance with this invention. In a first step 11 of the method 10, a workpiece that is to be manufactured into the vehicle frame component is provided. As will be explained in greater detail below, the workpiece is preferably a closed channel structural member having a circular or box-shaped cross sectional shape. However, the workpiece may be formed having any desired cross sectional shape. The workpiece is preferably formed from a relatively lightweight metallic material, such as aluminum or alloys thereof. However, any desired metallic material may be used to form the workpiece.

In a second step 12 of the method 10, the workpiece is subjected to a scanning heat treatment process. The scanning heat treatment process can be generally characterized as any process for heat treating the workpiece in a continuous and longitudinal manner from one end to the other. This can be accomplished by initially positioning a first end of the workpiece adjacent to a hollow heat treatment mechanism, such as an annular inductor coil. Then, the workpiece is moved longitudinally through the heat treatment mechanism such that it is heat treated in a continuous and longitudinal manner from one end to the other as it passes therethrough. The scanning heat treatment process can be performed in a number of different ways, and the structures of several embodiments of an apparatus for performing such a scanning heat treatment process are discussed in detail below. The heat treatment is a retrogression heat treatment process. Generally speaking, the retrogression heat treatment process is performed by rapidly heating the workpiece to a sufficient temperature that provides for full or partial softening thereof, followed by relatively rapid cooling. Notwithstanding this cooling, the workpiece retains the full or partial softening characteristics for at least a relatively short period of time.

The third step 13 of the method 10 involves performing a deforming process on the workpiece. Preferably, this deforming process (which, if desired, can be omitted in its entirety) is performed during the period of time following the retrogression heat treatment process in which the workpiece retains the full or partial softening characteristics. Any desired deforming process may be performed on the workpiece. If, for example, the workpiece is a closed channel structural member, the deforming process may be performed by hydroforming. Hydroforming is a well known process that uses pressurized fluid to deform a closed channel structural member into a desired shape. To accomplish this, the closed channel structural member is initially disposed between two die sections of a hydroforming apparatus that, when closed together, define a die cavity having a desired final shape. Thereafter, the closed channel structural member is filled with a pressurized fluid, typically a relatively incompressible liquid such as water. The pressure of the fluid is increased to a magnitude where the closed channel structural member is expanded or otherwise deformed outwardly into conformance with the die cavity. As a result, the closed channel structural member can be deformed into the desired final shape for the vehicle frame component by the hydroforming process.

The deforming process may alternatively be performed by magnetic pulse forming. Magnetic pulse forming is also a well known process that uses an electromagnetic field to deform a workpiece into a desire shape. To accomplish this, an electromagnetic coil is provided for generating an intense magnetic field about the workpiece. When this occurs, a large pressure is exerted on the workpiece, causing it to be deformed against a support surface. If the electromagnetic coil is disposed about the exterior of the workpiece, then the workpiece is deformed inwardly into engagement with the support surface. If, on the other hand, the electromagnetic coil is disposed within the interior of the workpiece, then the workpiece is deformed outwardly into engagement with the support surface. In either event, the workpiece can be deformed into the desired final shape for the vehicle frame component by the magnetic pulse forming process.

In a final step 14 of the method 10, the vehicle frame component is secured to one or more other vehicle frame components to form a vehicle frame assembly. The securing of such vehicle frame components is performed by a magnetic pulse welding operation. Magnetic pulse welding is a process wherein first and second vehicle frame components are initially disposed telescopically within one another. When so disposed, one end of the first vehicle frame component longitudinally overlaps one end of the second vehicle frame component. An electromagnetic coil is provided for generating an intense magnetic field about the overlapping portions of the first and second vehicle frame components. When this occurs, a large pressure is exerted on the first and second vehicle frame components, causing them to move toward one another at a high velocity. If the electromagnetic coil is disposed about the exterior of the two vehicle frame components, then the outer vehicle frame component is deformed inwardly into engagement with the inner vehicle frame component. If, on the other hand, the electromagnetic coil is disposed within the interior of the two vehicle frame components, then the inner vehicle frame component is deformed outwardly into engagement with the outer vehicle frame component. In either event, the high velocity impact of the first and second vehicle frame components, as well as the large pressures exerted thereon, cause the two vehicle frame components to become permanently joined together.

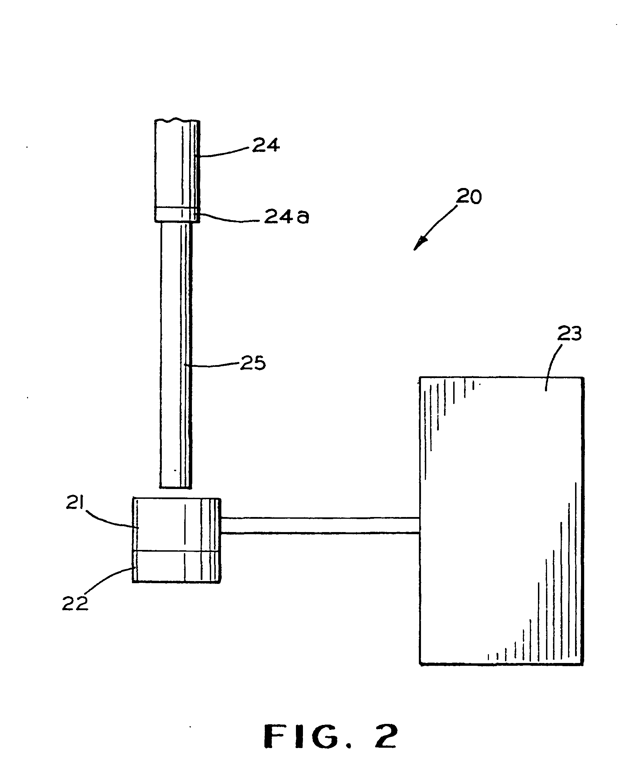

Fig. 2 is a schematic side elevational view of a first embodiment of an apparatus, indicated generally at 20, for performing the scanning heat treatment process in accordance with this invention. The apparatus 20 includes an annular induction heating coil 21 and an annular water quenching ring 22 that are preferably disposed adjacent to one another, as illustrated. The induction heating coil 21 is conventional in the art and is connected to a control circuit 23 for selectively causing an electrical current to flow therethrough. The operation of the induction heating coil 21 and the quenching ring 22 will be explained further below. The apparatus 20 further includes a support mechanism, a portion of which is illustrated at 24. The support mechanism 24 includes a collet 24a or other mechanism for engaging one end of a workpiece 25. The illustrated support mechanism 24 is structured so as to suspend the workpiece 25 vertically downwardly from the end engaged by the collet 24a, although such is not necessary.

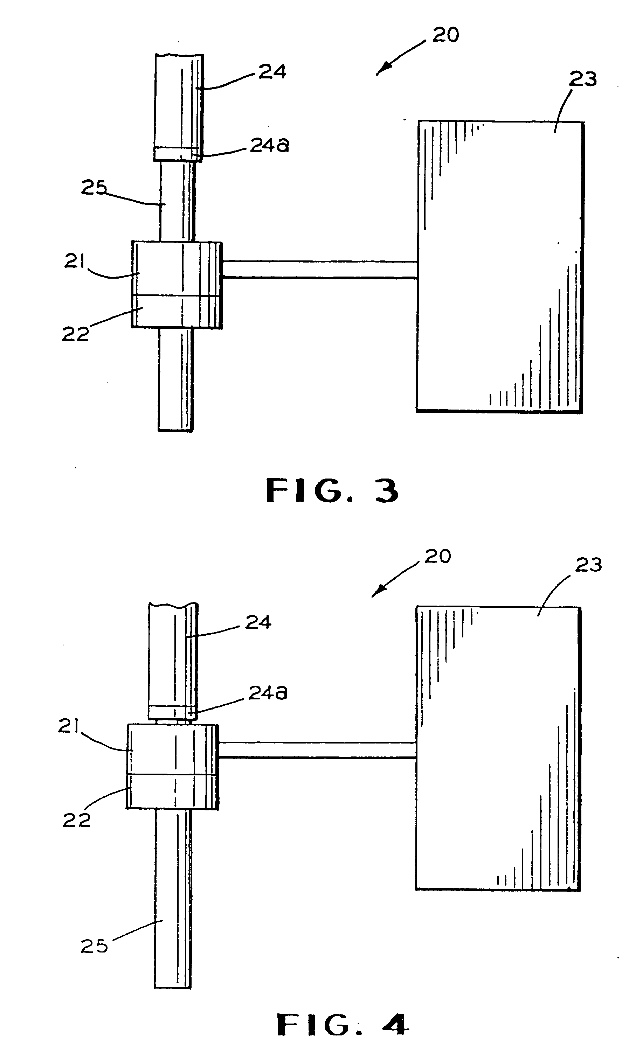

The locations of the support mechanism 24 and the workpiece 25 at the commencement of the scanning heat treatment process to be performed by the induction heating coil 21 and the quenching ring 22 are illustrated in Fig. 2. As shown therein, the workpiece 25 is initially suspended vertically above the induction heating coil 21 and the quenching ring 22 by the support mechanism 24. Then, the support mechanism 24 is operated to lower the workpiece 25 vertically downwardly through the induction heating coil 21 and the quenching ring 22. As this occurs, an electrical current is passed through the induction heating coil 21 by the control circuit 23. As is well known, when an electrical current is passed through the induction heating coil 21, corresponding electrical currents are induced to flow within the metallic workpiece 25. Because of the internal electrical resistance of the metallic workpiece 25 to the flow of electrical current, these induced electrical currents are converted to heat energy. As a result, the leading end of the workpiece 25 that is initially disposed within the induction heating coil 21 is rapidly heated to an elevated temperature. If desired, other heating structures may be provided in lieu of the inductive heating coil 21. Figs. 3 and 4 show the support mechanism 24 and the workpiece at subsequent stages of the scanning heat treatment process. In Fig. 3, the support mechanism 24 and the workpiece 25 are located at an intermediate position relative to the heating coil 21 and the quenching ring 22 during the scanning heat treatment process. In Fig. 4, the support mechanism 24 and the workpiece 25 are located at an ending position relative to the heating coil 21 and the quenching ring 22 at the conclusion of the scanning heat treatment process. As is apparent from these drawings, the support mechanism 24 is effective to lower the workpiece 25 longitudinally downwardly through the inductive heating coil 21 such that the workpiece 25 is heated in a continuous and longitudinal manner from the leading end to the trailing end.

As mentioned above, the quenching ring 22 is disposed adjacent to the induction heating coil 21. The quenching ring 22 is also conventional in the art and is provided to rapidly cool the workpiece 25 after it has been heated by the induction heating coil 21. Thus, after the leading end of the workpiece 25 has been moved downwardly through the induction heating coil 21 and rapidly heated, it is immediately moved downwardly through the quenching ring 22, wherein it is rapidly cooled. If desired, other cooling structures may be provided in lieu of the quenching ring 22. Thus, the support mechanism 24 is also effective to lower the workpiece 25 longitudinally downwardly through the quenching ring 22 such that the workpiece 25 is also cooled in a continuous and longitudinal manner from the leading end to the trailing end after being heated.

At the conclusion of the scanning heat treatment process, the workpiece 25 can be released from the collet 24a of the support mechanism 24 and transferred to a transport mechanism (not shown) for delivery to a apparatus for deforming the workpiece 25 in accordance with the third step 13 of the method 10 described above. Preferably, the workpiece 25 is released from the collet 24a without having to be retracted upwardly through the inductive heating coil 21 and the quenching ring 22. However, the workpiece 25 may be retracted upwardly through the inductive heating coil 21 and the quenching ring 22 before being transferred to the transport mechanism if desired.

Accordingly, it can be seen that the scanning heat treatment process is performed on the workpiece 25 in a continuous and longitudinal manner from one end to the other. As mentioned above, the scanning heat treatment process is preferably a retrogression heat treatment process, wherein the workpiece 25 is rapidly heated by the inductive heating coil 21 to a sufficient temperature that provides for full or partial softening thereof, followed by relatively rapid cooling by the quenching ring 22. Notwithstanding this cooling, the workpiece 25 retains the full or partial softening characteristics for at least a relatively short period of time in which the subsequent deforming step 13 and the magnetic pulse welding step 14 of the method 10 described above can be performed.

As mentioned above, the workpiece 25 is preferably supported vertically during the scanning heat treatment process to prevent the shape thereof from becoming distorted. This is because vehicle frame components are frequently relatively long in length and are relatively heavy in weight. If a relatively long and heavy workpiece 25 is suspended horizontally at its two ends during the scanning heat treatment process, it is possible that the central portion thereof may bow downwardly or otherwise distort under the influence of gravity during or after the scanning heat treatment process. By suspending the workpiece 25 vertically during the scanning heat treatment process, the likelihood of such distortions is greatly reduced because the weight of the workpiece 25 is insufficient to cause any significant elongation or other shape distortion thereof.

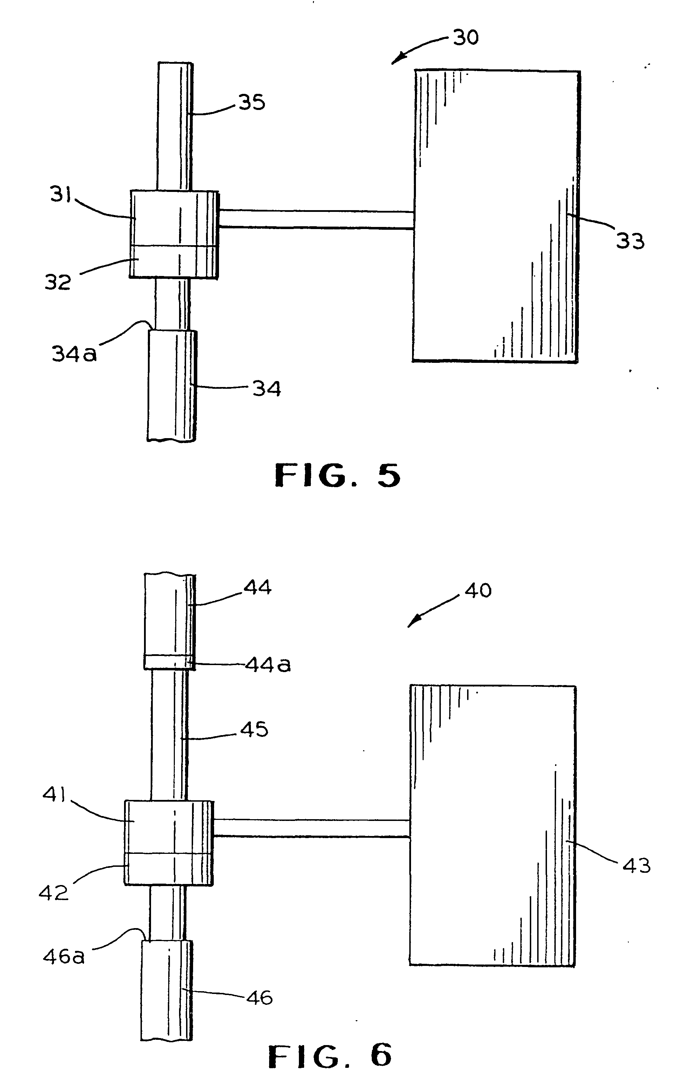

Fig. 5 is a schematic side elevational view of a second embodiment of an apparatus, indicated generally at 30, for performing the scanning heat treatment process in accordance with this invention. The apparatus 30 includes an annular induction heating coil 31 and an annular water quenching ring 32 that are preferably disposed adjacent to one another, as illustrated. The induction heating coil 31 is conventional in the art and is connected to a control circuit 33 for selectively causing an electrical current to flow therethrough. The operation of the induction heating coil 31, the quenching ring 32, and the control circuit 33 are essentially the same as described above. The apparatus 30 further includes a support mechanism, a portion of which is illustrated at 34. The support mechanism 34 includes an end surface 34a or other engaging mechanism for engaging one end of a workpiece 35. The illustrated support mechanism 34 is structured so as to support the workpiece 35 vertically upwardly from the end engaged by the end surface 34a. The support mechanism 34 functions in a similar manner as the above-described support mechanism 24 to lower the workpiece 35 longitudinally downwardly to perform the scanning heat treatment process.

Fig. 6 is a schematic side elevational view of a third embodiment of an apparatus, indicated generally at 40, for performing the scanning heat treatment process in accordance with this invention. The apparatus 40 includes an annular induction heating coil 41 and an annular water quenching ring 42 that are preferably disposed adjacent to one another, as illustrated. The induction heating coil 41 is conventional in the art and is connected to a control circuit 43 for selectively causing an electrical current to flow therethrough. The operation of the induction heating coil 41, the quenching ring 42, and the control circuit 43 are essentially the same as described above. The apparatus 40 further includes an upper support mechanism, a portion of which is illustrated at 44. The upper support mechanism 44 includes a collet 44a or other engaging structure for engaging an upper end of a workpiece 45 and functions similarly to the support mechanism 24 described above. The apparatus 40 further includes a lower support mechanism, a portion of which is illustrated at 46. The lower support mechanism 46 includes an end surface 46a or other engaging mechanism for engaging a lower end of the workpiece 45 and functions similarly to the support mechanism 35 described above.

The illustrated upper and lower support mechanisms 44 and 46 are structured so as to support the workpiece 45 vertically to lower the workpiece 35 longitudinally downwardly to perform the scanning heat treatment process. This can be accomplished by initially supporting the upper end of the workpiece 45 only by the upper support mechanism 44 and lowering the workpiece 45 partially downwardly through the inductive heating coil 41 and the quenching ring 42. During this initial movement, the lower end of the workpiece 45 is freely movable through the inductive heating coil 41 and the quenching ring 42. When the workpiece 45 has been moved partially through the inductive heating coil 41 and the quenching ring 42, the lower end engages the lower support mechanism 46, and the upper support mechanism 44 is released. Thereafter, the lower support mechanism 46 continues the lowering of the workpiece 45. During this subsequent movement, the upper end of the workpiece 45 is freely movable through the inductive heating coil 41 and the quenching ring 42. Thus, both extreme ends of the workpiece 45 can be fully subjected to the scanning heat treatment process.

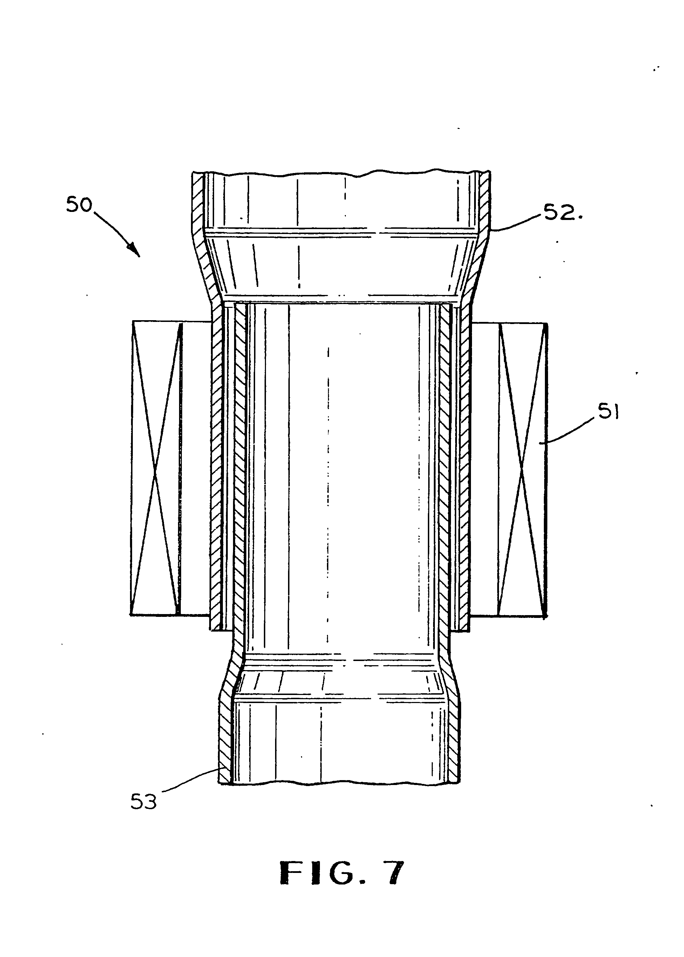

Fig. 7 is a schematic elevational view of an apparatus, indicated generally at 50, for performing a magnetic pulse welding operation in accordance with the final step 14 of the method 10 described above. The apparatus 50 includes an inductor 51, the structure of which is generally conventional in the art. The illustrated inductor 51 is annular in shape and is sized to be disposed concentrically about first and second workpieces 52 and 53 that are themselves disposed in telescopic relationship. However, it will be appreciated that the inductor 51 may alternatively be sized to be disposed telescopically within the two workpieces 52 and 53. The illustrated workpieces 52 and 53 can be embodied as separate members (sections of a side rail, for example) that are adapted to be joined together to form a single integral vehicle frame component (such as a side rail) for a vehicle frame assembly. However, the two workpieces 52 and 53 may be embodied as any other structures (such as side rail and a cross member, for example) that form a portion of a vehicle frame assembly. It is contemplated that either or both of the workpieces 52 and 53 may have been subjected to the above-described retrogression heat treatment process.

Regardless, the two workpieces 52 and 53 are initially disposed in a spaced apart relationship, as shown. Although the clearance between the two workpieces 52 and 53 may be adjusted as desired, it has been found acceptable to provide a clearance in the range of from 0.050 inch to 0.100 inch. The inductor 51 is then disposed about the two workpieces 52 and 53. When the inductor 51 is energized in a manner that is well known in the art, an electromagnetic field is generated about the two workpieces 52 and 53. This electromagnetic field causes the outer workpiece 52 to be collapsed inwardly into engagement with the inner workpiece 53 at a high velocity. As a result, the two workpieces 52 and 53 are welded or molecularly bonded together. Preferably, this joining process is performed during the period of time following the retrogression heat treatment process in which the workpiece 52 retains the full or partial softening characteristics. This is because the retrogression heat treatment process temporarily alters the material properties of the workpiece 52, eliminating the need for extremely high power and extremely tight tolerances during the magnetic pulse welding process.

The principle and mode of operation of this invention have been explained and illustrated in its preferred embodiment.

## Claims

1. A method for manufacturing a vehicle frame component comprising the steps of:
(a) providing a workpiece having a first portion and a second portion;
(b) performing a retrogression heat treatment process on the workpiece in a continuous and longitudinal manner from the first portion of the workpiece to the second portion of the workpiece; and
(c) deforming the workpiece to form a vehicle frame component.

2. The method defined in Claim 1 wherein said step (a) is performed by providing the workpiece having a first end and a second end, and wherein said step (b) is performed by performing the retrogression heat treatment process on the workpiece in a continuous and longitudinal manner from the first end of the workpiece to the second end of the workpiece.

3. The method defined in Claim 1 wherein said step (b) is performed by providing an inductive heating coil and a quenching ring and by moving the workpiece relative to the inductive heating coil and the quenching ring.

4. The method defined in Claim 3 wherein said step (b) is performed by providing the inductive heating coil and the quenching ring adjacent to one another.

5. The method defined in Claim 3 wherein said step (b) is performed while the workpiece is oriented vertically.

6. The method defined in Claim 5 wherein said step (b) is performed by suspending the workpiece vertically by an upper end and moving the workpiece relative to an inductive heating coil and a quenching ring.

7. The method defined in Claim 6 wherein said step (b) is performed by moving the workpiece downwardly through the inductive heating coil and the quenching ring.

8. The method defined in Claim 5 wherein said step (b) is performed by supporting the workpiece vertically by a lower end and moving the workpiece relative to an inductive heating coil and a quenching ring.

9. The method defined in Claim 6 wherein said step (b) is performed by moving the workpiece upwardly through the inductive heating coil and the quenching ring.

10. The method defined in Claim 5 wherein said step (b) is performed by initially suspending the workpiece vertically by an upper end and moving the workpiece relative to an inductive heating coil and a quenching ring, and by subsequently supporting the workpiece vertically by a lower end and moving the workpiece further relative to the inductive heating coil and the quenching ring.

## Revendications

1. Procédé pour fabriquer un élément de châssis de véhicule comportant les étapes consistant à :
(a) fournir une pièce ayant une première partie et une seconde partie,
(b) exécuter un procédé de traitement thermique par rétrogression sur la pièce de manière continue et longitudinale à partir de la première partie de la pièce jusqu'à la seconde partie de la pièce, et
(c) déformer la pièce pour former un élément de châssis de véhicule.

2. Procédé selon la revendication 1 dans lequel ladite étape (a) est exécutée en fournissant la pièce munie d'une première extrémité et d'une seconde extrémité, et dans lequel ladite étape (b) est exécutée en exécutant le procédé de traitement thermique par rétrogression sur la pièce de manière continue et longitudinale à partir de la première extrémité de la pièce jusqu'à la seconde extrémité de la pièce.

3. Procédé selon la revendication 1 dans lequel ladite étape (b) est exécutée en fournissant une bobine de chauffage par induction et une bague de trempe et en déplaçant la pièce par rapport à la bobine de chauffage par induction et à la bague de trempe.

4. Procédé selon la revendication 3 dans lequel ladite étape (b) est exécutée en agençant la bobine de chauffage par induction et la bague de trempe adjacentes l'une à l'autre.

5. Procédé selon la revendication 3 dans lequel ladite étape (b) est exécutée alors que la pièce est orientée verticalement.

6. Procédé selon la revendication 5 dans lequel ladite étape (b) est exécutée en suspendant la pièce verticalement par une extrémité supérieure et en déplaçant la pièce par rapport à une bobine de chauffage par induction et à une bague de trempe.

7. Procédé selon la revendication 6 dans lequel ladite étape (b) est exécutée en déplaçant la pièce vers le bas à travers la bobine de chauffage par induction et à travers la bague de trempe.

8. Procédé selon la revendication 5 dans lequel ladite étape (b) est exécutée en supportant la pièce verticalement par une extrémité inférieure et déplaçant la pièce par rapport à une bobine de chauffage par induction et à une bague de trempe.

9. Procédé selon la revendication 6 dans lequel ladite étape (b) est exécutée en déplaçant la pièce vers le haut à travers la bobine de chauffage par induction et à travers la bague de trempe.

10. Procédé selon la revendication 5 dans lequel ladite étape (b) est exécutée en suspendant initialement la pièce verticalement par une extrémité supérieure et en déplaçant la pièce par rapport à une bobine de chauffage par induction et à une bague de trempe, et en supportant ultérieurement la pièce verticalement par une extrémité inférieure et en déplaçant davantage la pièce par rapport à la bobine de chauffage par induction et à la bague de trempe.

## Patentansprüche

1. Verfahren zum Fertigen einer Fahrzeugrahmenkomponente, umfassend die Schritte:
a) Bereitstellen eines Werkstücks, das einen ersten Teil und einen zweiten Teil aufweist;
b) Ausführen einer Retrogressions-Wärmebehandlung am Werkstück in kontinuierlicher und längsgerichteter Weise vom ersten Teil des Werkstücks zum zweiten Teil des Werkstücks; und
c) Verformen des Werkstücks, damit eine Fahrzeugrahmenkomponente gebildet wird.

2. Verfahren nach Anspruch 1, wobei der Schritt a) dadurch ausgeführt wird, dass das Werkstück bereitgestellt wird, das ein erstes Ende und ein zweites Ende aufweist, und wobei der Schritt b) dadurch ausgeführt wird, dass die Retrogressions-Wärmebehandlung am Werkstück in kontinuierlicher und längsgerichteter Weise vom ersten Ende des Werkstücks zum zweiten Ende des Werkstücks erfolgt.

3. Verfahren nach Anspruch 1, wobei der Schritt b) dadurch ausgeführt wird, dass eine induktive Heizspule und ein Abschreckring bereitgestellt werden und das Werkstück relativ zur induktiven Heizspule und zum Abschreckring bewegt wird.

4. Verfahren nach Anspruch 3, wobei der Schritt b) dadurch ausgeführt wird, dass die induktive Heizspule und der Abschreckring benachbart zueinander angeordnet werden.

5. Verfahren nach Anspruch 3, wobei der Schritt b) bei vertikal ausgerichtetem Werkstück ausgeführt wird.

6. Verfahren nach Anspruch 5, wobei der Schritt b) dadurch ausgeführt wird, dass das Werkstück an einem oberen Ende vertikal aufgehängt wird und das Werkstück relativ zu einer induktiven Heizspule und einem Abschreckring bewegt wird.

7. Verfahren nach Anspruch 6, wobei der Schritt b) dadurch ausgeführt wird, dass das Werkstück nach unten durch die induktive Heizspule und den Abschreckring bewegt wird.

8. Verfahren nach Anspruch 5, wobei der Schritt b) dadurch ausgeführt wird, dass das Werkstück an einem unteren Ende vertikal gehalten wird und das Werkstück relativ zu einer induktiven Heizspule und einem Abschreckring bewegt wird.

9. Verfahren nach Anspruch 6, wobei der Schritt b) dadurch ausgeführt wird, dass das Werkstück nach oben durch die induktive Heizspule und den Abschreckring bewegt wird.

10. Verfahren nach Anspruch 5, wobei der Schritt b) dadurch ausgeführt wird, dass das Werkstück zuerst an einem oberen Ende vertikal aufgehängt wird und das Werkstück relativ zu einer induktiven Heizspule und einem Abschreckring bewegt wird, und dass anschließend das Werkstück an einem unteren Ende vertikal gehalten wird und das Werkstück weiter relativ zu einer induktiven Heizspule und einem Abschreckring bewegt wird.
